# EUROPEAN PATENT APPLICATION

(11) **EP 2 738 658 A2**
(43) Date of publication of application: **04.06.2014**
(21) Application number: 13194942.2
(22) Date of filing: 28.11.2013
(51) Int. Cl.: G06F 3/0484, G06F 3/0488

(54) **Terminal and method for operating the same**

(30) Priority: 28.11.2012 KR 20120136271
(71) Applicant: Samsung Display Co., Ltd., Gyeonggi-Do (KR)
(72) Inventor: Kim, Dong Ho, Cheonan-si Chungcheongnam-do (KR); Park, Sung Un, Suwon-si Gyeonggi-do (KR)
(74) Representative: Mounteney, Simon James

(57) **Abstract**

A method for operating a terminal includes: receiving an input of a first gesture that indicates at least a partial area in a document displayed on the terminal; receiving an input of a second gesture that corresponds to a specific function; and performing the specific function with respect to contents of the document that are included in the at least the partial area in the document.

## Description

### BACKGROUND

### 1. Field

The present invention relates to a terminal and a method for operating the same, and more particularly to a terminal and a method for operating the same, which allow easier editing of a document including a picture or a text.

### 2. Description of Related Art

With the development of information communication technology and in accordance with the demands of a diversified information society, usage of a terminal, such as a personal computer, a smart phone, a mobile terminal, a portable electronic device, or the like, has quickly become widespread. A user can input data into a terminal using various kinds of input devices, such as a keyboard, a mouse, a track ball, a stylus pen, a touch screen, and a button.

A Graphic User Interface (GUI) refers to an environment in which a user can perform an operation through a screen on which graphics are displayed when the user exchanges information with an electronic device. With the development of electronic devices, various kinds of terminals that perform user operations have adopted a GUI, and perform input/output operations with the user through the GUI.

For example, the user can edit a document that includes a picture or a text through the GUI. During editing of the document, an icon that corresponds to a specific function may be displayed on the screen, and the user can make the specific function be performed by selecting the icon using an input device or touching it with a finger stylus or the like.

### SUMMARY

The present invention sets out to provide a terminal and a method for operating the same, which allow easier editing of a document including a picture or a text.

The present invention also sets out to provide a terminal and a method for operating the same, which allow easier editing of a document without selecting an icon or a menu.

The present invention also aims to provide a terminal and a method for operating the same, which allow easier editing of a document more rapidly.

Additional aspects, subjects, and features of the invention will be set forth in part in the description which follows and will become apparent to those having ordinary skill in the art upon examination of the following or may be learned from practice of the invention.

According to an aspect of the present invention, a method for operating a terminal includes: receiving an input of a first gesture that indicates at least a partial area in a document displayed on the terminal; receiving an input of a second gesture that corresponds to a specific function; and performing the specific function with respect to contents of the document that are included in the at least the partial area in the document.

The receiving the input of the first gesture may include receiving a closed curve as the first gesture, and the first gesture may indicate an area which is included in the input closed curve in the document.

The closed curve may include only curves.

The closed curve may be any one of a polygon, a rectangle, a triangle, a circle, or an ellipse.

The receiving the input of the first gesture may include receiving a zigzag pattern as the first gesture, and the first gesture may indicate an area which is included in a polygon that is formed by connecting adjacent vertices of the input zigzag pattern to each other.

The receiving the input of the first gesture may include receiving a swirl pattern as the first gesture, and the first gesture may indicate an area which is included in a closed curve that is formed by an outline of the input swirl pattern in the document.

The receiving the input of the first gesture and the receiving the input of the second gesture may include receiving the first gesture and the second gesture consecutively as one gesture.

The specific function may be any one of "insert", "delete", "copy", "cut", or "paste," and the specific function may be performed with respect to the contents included in the document.

The receiving the input of the second gesture may include receiving a proof-correction mark that means "delete", and the specific function is a "delete" function.

The receiving the input of the second gesture may include receiving an input of a straight line or a curve that crosses the at least the partial area, and the specific function may be a "cut" function.

According to another aspect of the present invention, a method for operating a terminal includes: detecting two or more first points, which are concurrently touched, from a touch screen; detecting at least one dragged second point among the touched first points; and deleting a portion of the contents of a document displayed on the touch screen, the portion corresponding to a path in which the second point is dragged.

The method may further include: detecting a third point touched from the touch screen; detecting dragging of the touched third point; and inserting a line in the document along a path in which the third point is dragged.

The deleting may include deleting at least a part of a picture included in the document along the path in which the second point is dragged, if the document includes the picture, and deleting at least a part of a text included in the document along the path in which the second point is dragged, if the document includes the text.

The deleting may include inserting a white line in the document along the path in which the second point is dragged, if the document includes the picture, and replacing at least a part of the text by a space along the path in which the second point is dragged, if the document includes the text.

According to still another aspect of the present invention, a method for operating a terminal includes: detecting first dragging from one point on a first side of a display area of the terminal to one point on a second side that faces the first side; detecting second dragging starting from a point other than on the first side and the second side of the display area; and inserting a line in contents of a document that is displayed on the display area, along a path in which the second dragging is performed.

The method may further include: detecting third dragging from one point on the second side to one point on the first side; detecting fourth dragging starting from a point other than on the first side and the second side of the display area; and deleting a portion of the contents of the document. The portion may correspond to a path in which the fourth dragging is performed.

The deleting may include inserting a white line in the document along the path in which the fourth dragging is performed, if the document includes a picture, and replacing at least a part of a text by a space along the path in which the fourth dragging is performed, if the document includes the text.

According to an aspect of the present invention, a terminal includes: an input unit for receiving information; a display unit for displaying contents included in a document; and a control unit for changing the contents included in the document according to the information received through the input unit. The input unit is configured to receive an input of a first gesture that indicates at least a partial area in the document and a second gesture that corresponds to a specific function, and the control unit is configured to perform the specific function with respect to the contents included in the at least the partial area in the document.

According to still another aspect of the present invention, a terminal includes: an input unit for receiving information; a display unit for displaying contents included in a document; and a control unit for changing the contents included in the document according to the information received through the input unit. The input unit is configured to detect two or more first points, which are concurrently touched, and detect at least one dragged second point among the touched first points, and the control unit is configured to delete a portion of the contents of the document, the portion corresponding to a path in which the second point is dragged.

According to still another aspect of the present invention, a terminal includes: an input unit for receiving information; a display unit for displaying contents included in a document; and a control unit for changing the contents included in the document according to the information received through the input unit. The input unit is configured to detect first dragging from one point on a first side of the display unit to one point on a second side that faces the first side, and then detect second dragging starting from a point other than on the first side and the second side of the display unit, and the control unit is configured to delete a portion of the contents of the document, the portion corresponding to a path in which the second dragging is performed.

According to embodiments of the present invention, a document including a picture or a text may be edited more easily.

According to embodiments of the present invention, a document may be edited without selecting an icon or a menu.

According to embodiments of the present invention, a document may be edited more rapidly.

At least some of the above and other features of the invention are set out in the claims.

### BRIEF DESCRIPTION OF THE DRAWINGS

The above and other objects, features and aspects of the present invention will be more apparent from the following detailed description taken in conjunction with the accompanying drawings, in which:
FIG. 1 is a block diagram illustrating the configuration of a terminal according to an embodiment of the present invention;
FIG. 2 is a flowchart illustrating a method for operating a terminal according to an embodiment of the present invention;
FIG. 3 is a diagram of a terminal explaining a method for operating the terminal according to an embodiment of the present invention;
FIG. 4 is a diagram of a terminal explaining a method for operating the terminal according to an embodiment of the present invention;
FIG. 5 is a diagram of a terminal explaining a method for operating the terminal according to an embodiment of the present invention;
FIG. 6 is a diagram of a terminal explaining a method for operating the terminal according to an embodiment of the present invention;
FIG. 7 is a diagram of a terminal on which a part of a picture in a document is deleted according to an embodiment of the present invention;
FIG. 8 is a flowchart illustrating a method for operating a terminal according to another embodiment of the present invention;
FIG. 9 is a conceptual diagram explaining a method for operating a terminal according to another embodiment of the present invention;
FIG. 10 is a conceptual diagram explaining a method for operating a terminal according to another embodiment of the present invention;
FIG. 11 is a flowchart illustrating a method for operating a terminal according to yet another embodiment of the present invention;
FIG. 12 is a conceptual diagram explaining a method for operating a terminal according to another embodiment of the present invention; and
FIG. 13 is a conceptual diagram explaining a method for operating a terminal according to another embodiment of the present invention.

### DETAILED DESCRIPTION

Aspects and features of the present invention and methods of accomplishing the same may be understood more readily by reference to the following detailed description of example embodiments and the accompanying drawings. The present invention may, however, be embodied in many different forms and should not be construed as being limited to the embodiments set forth herein. Rather, these embodiments are provided so that this disclosure will be more thorough and complete and will more fully convey the concept of the invention to those skilled in the art, and the present invention should only be defined by the appended claims and their equivalents. Thus, in some embodiments, well-known structures and devices may not be shown in order not to obscure the description of the invention with unnecessary detail. Like numbers refer to like elements throughout. In the drawings, the thickness of layers and regions may be exaggerated for clarity.

It will be understood that when an element or layer is referred to as being "on" or "connected to" another element or layer, it can be directly on or connected to the other element or layer or intervening elements or layers may be present. In contrast, when an element is referred to as being "directly on" or "directly connected to" another element or layer, there are no intervening elements or layers present. As used herein, the term "and/or" includes any and all combinations of one or more of the associated listed items.

Spatially relative terms, such as "below," "beneath," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

Embodiments described herein will be described with reference to plan views and/or cross-sectional views, by way of ideal schematic views of the embodiments of the present invention. Accordingly, exemplary views may be modified depending on manufacturing technologies and/or tolerances. Therefore, embodiments of the present invention are not limited to those shown in the views, but include modifications in configuration formed on the basis of manufacturing processes. Therefore, regions exemplified in the figures may have schematic properties and may exemplify specific shapes of regions of elements. However, such exemplified properties and shapes should not limit aspects of the invention.

Hereinafter, a terminal and a method for operating the same according to example embodiments of the present invention will be described in detail with reference to the accompanying drawings.

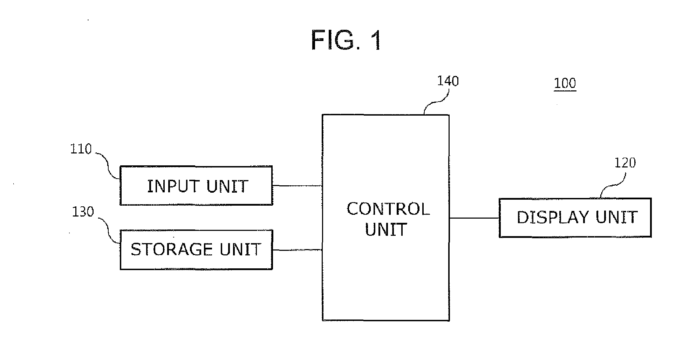

FIG. 1 is a block diagram illustrating the configuration of a terminal 100 according to an embodiment of the present invention. The terminal 100 may include, for example, an electronic device that can process a document, such as a personal computer, a smart phone, a mobile terminal, or a portable electronic device.

Referring to FIG. 1, the terminal 100 according to this embodiment of the present invention includes an input unit 110 for receiving information from the outside, a display unit 120 for displaying the contents included in a document, a storage unit 130 for storing the contents included in the document, and a control unit 140 for changing the contents included in the document according to the information received through the input unit 110.

The input unit 110 may receive information from the outside. The input unit 110 may receive the information from a user of the terminal 100, or receive the information from another external device. The input unit 110 may be, for example, a button, a touch screen, a track ball, a stylus pen, an acceleration sensor, an optical sensor, an ultrasonic sensor, an infrared sensor, a microphone, a keyboard, a mouse, or a network interface.

The display unit 120 serves to display an image. The display unit 120 may be, for example, a flat display device, such as a Liquid Crystal Display (LCD), an Organic Light Emitting Diode (OLED), or a Plasma Display Panel (PDP). The display unit 120 and the input unit 110 may be integrally configured, for example, like a touch screen, or may be separately configured.

The display unit 120 may display the contents included in a document. The document may include, for example, a picture, a text, music, a moving image, or other objects.

The storage unit 130 may store information. The storage unit 130 may have a volatile memory or a nonvolatile memory. The storage unit 130 may have, for example, a flash memory, a ROM, a RAM, an EEROM, an EPROM, an EEPROM, a Hard Disk Drive (HDD), or a register. The storage unit 130 may include, for example, a file system, a database, or an embedded database. The storage unit 130 may store the contents included in the document.

The control unit 140 may control respective constituent elements. The control unit 140 may be, for example, a Central Processing Unit (CPU).

The control unit 140 may change the contents included in the document according to the information received through the input unit 110. For example, the control unit 140 may delete a part of a picture or a text included in the document according to pointing information received through, for example, a mouse or a touch screen. Further, the control unit 140 may insert a picture or a text in the document according to pointing information received through, for example, a mouse or a touch screen.

Accordingly, the user can edit the contents included in the document by operating the input unit 110 of the terminal 100. Hereinafter, it will be described in detail how the contents included in the document can be edited according to a method for operating a terminal 100 according to an embodiment of the present invention.

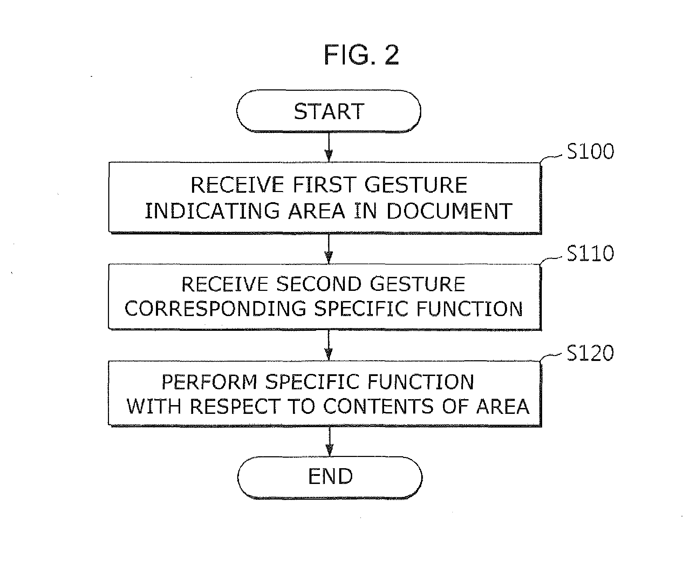

FIG. 2 is a flowchart illustrating a method for operating a terminal 100 according to an embodiment of the present invention. Referring to FIG. 2, the method for operating the terminal 100 according to an embodiment of the present invention may first receive an input of a first gesture 150 that indicates at least a part of an area in the document (S100).

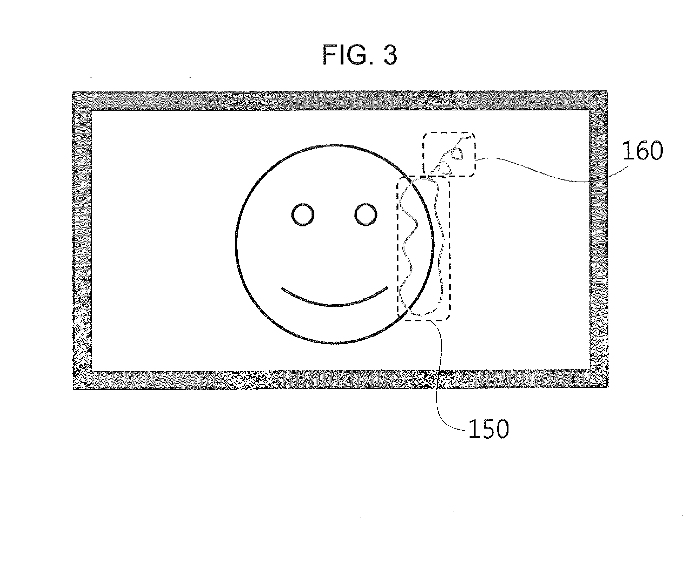

FIG. 3 is a diagram of a terminal explaining a method for operating the terminal according to an embodiment of the present invention. Referring to FIG. 3, a closed curve may be input as the first gesture 150. In the closed curve, a partial area of a picture or a text included in the document may be included. Accordingly, the first gesture 150 may indicate the area included in the input closed curve. The closed curve may include only curves as illustrated in FIG. 3. Further, the closed curve may refer to a polygon, a rectangle, a triangle, a circle, or an ellipse.

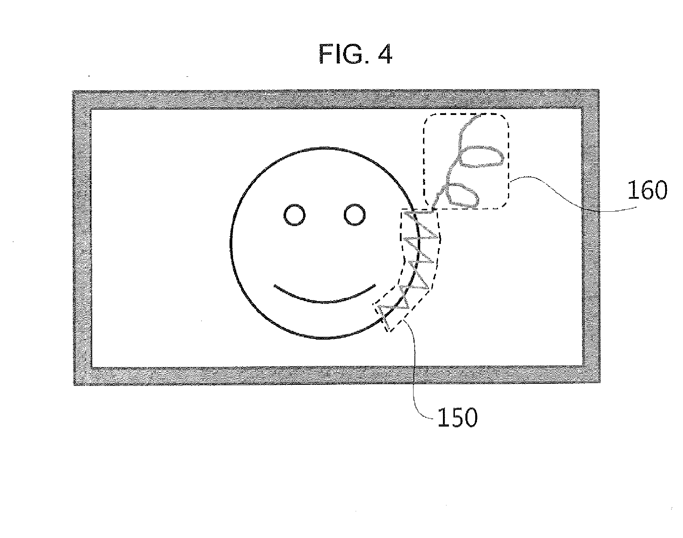

FIG. 4 is a diagram of a terminal explaining a method for operating a terminal according to an embodiment of the present invention. Referring to FIG. 4, a zigzag pattern may be input as the first gesture 150. In a polygon that is formed by connecting adjacent vertices of the zigzag pattern, a partial area of the picture or text included in the document may be included. Accordingly, the first gesture 150 may indicate the area which is included in the polygon that is formed by connecting the adjacent vertices of the input zigzag pattern in the document. For example, as illustrated in FIG. 4, the first gesture 150 may indicate the area included in the polygon formed by the dotted line.

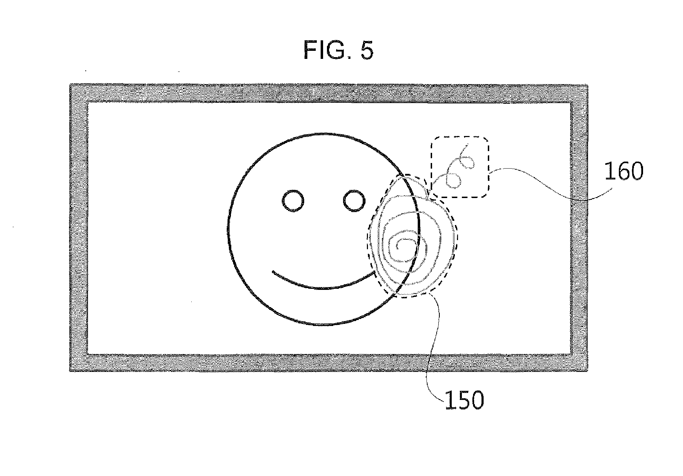

FIG. 5 is a diagram of a terminal explaining a method for operating a terminal according to an embodiment of the present invention. Referring to FIG. 5, a swirl pattern may be input as the first gesture 150. In a closed curve that is formed by an outline of the swirl pattern, a partial area of a picture or a text included in the document may be included. Accordingly, the first gesture 150 may indicate the area included in the closed curve that is formed by the outline of the input swirl pattern in the document.

The first gesture 150 is not limited to the embodiments illustrated in FIGS. 3 to 5, but may include various kinds of patterns that can specify at least a partial area in the document.

Referring again to FIG. 2, receiving an input of a second gesture 160 that corresponds to a specific function (S110) may be next performed. Referring to FIGS. 3 to 5, a proof-correction mark that means "delete" may be input as the second gesture 160. For example, as shown in FIGS. 3 to 5, the proof-correction mark may be a pair of consecutive loops.

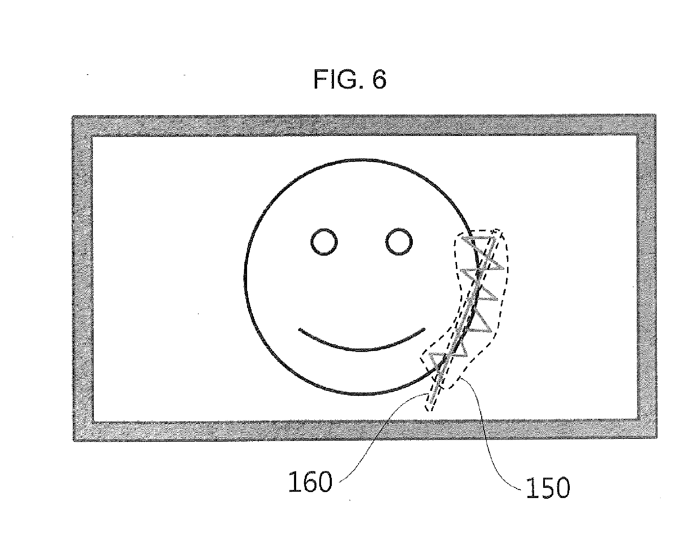

FIG. 6 is a diagram of a terminal explaining a method for operating the terminal according to an embodiment of the present invention. Referring to FIG. 6, after a zigzag pattern is input as the first gesture 150, a straight line or a curve, which penetrates (or crosses) a polygon that is formed by connecting adjacent vertices of the zigzag pattern, may be input as the second gesture 160.

The first gesture 150 and the second gesture 160 may be input as one consecutive gesture as illustrated in FIGS. 3 to 6, or may be input as plural independent gestures.

The second gesture 160 may correspond to (or may be predetermined to correspond to) a specific function. For example, functions for editing a picture or a text included in the document, such as the functions of "insert", "delete", "copy", "cut", and "paste" may be provided. Respective second gestures 160 that correspond to the respective editing functions may be predetermined. If the second gesture 160 is input, a corresponding function may be specified with reference to the contents (e.g., the determined contents or the contents specified by the first gesture 150) depending on what the input second gesture 160 is.

For example, a proof-correction mark that means "delete" may correspond to (or may be predetermined to correspond to) a "delete" function, and if the proof-correction mark that means "delete" is input as the second gesture 160, the "delete" function may be specified. Accordingly, if the proof-correction mark that means "delete" is input as the second gesture 160 as illustrated in FIGS. 3 to 5, the "delete" function may be specified.

Further, for example, a straight line or a curve that penetrates an area that is specified by the first gesture 150 may correspond to (e.g., may be predetermined to correspond to) a "cut" function, and if the straight line or the curve, which penetrates the area specified by the first gesture 150, is input as the second gesture 160, the "cut" function may be specified. Accordingly, if the straight line or the curve that penetrates the area specified by the first gesture 150 is input as the second gesture as illustrated in FIG. 6, the "cut" function may be specified.

Referring again to FIG. 2, performing the specific function with respect to the contents included in the area in the document (S120) may be next performed. For example, with respect to the contents included in the specific area that is specified by the first gesture 150 among the contents of the document, the function specified by the second gesture 160 may be performed.

Referring to FIG. 3, with respect to the area specified by the closed curve that is input as the first gesture 150, the "delete" function specified by the second gesture 160 may be performed. For example, the contents included in the area specified by the closed curve among the contents of the document may be deleted.

Referring to FIG. 4, with respect to the area specified by the zigzag pattern input as the first gesture 150, the "delete" function specified by the second gesture 160 may be performed. For example, the contents included in the area which is specified by the polygon that is formed by connecting the adjacent vertices of the zigzag pattern in the document may be deleted.

Referring to FIG. 5, with respect to the area specified by the swirl pattern input as the first gesture 150, the "delete" function specified by the second gesture 160 may be performed. For example, the contents included in the area which is specified by the closed curve that is formed by the outline of the swirl pattern among the contents of the document may be deleted.

Referring to FIG. 6, with respect to the area specified by the zigzag pattern input as the first gesture 150, the "cut" function specified by the second gesture 160 may be performed. For example, the contents included in the area which is specified by the polygon that is formed by connecting the adjacent vertices of the zigzag pattern among the contents of the document may be moved to a clipboard and may be deleted from the document.

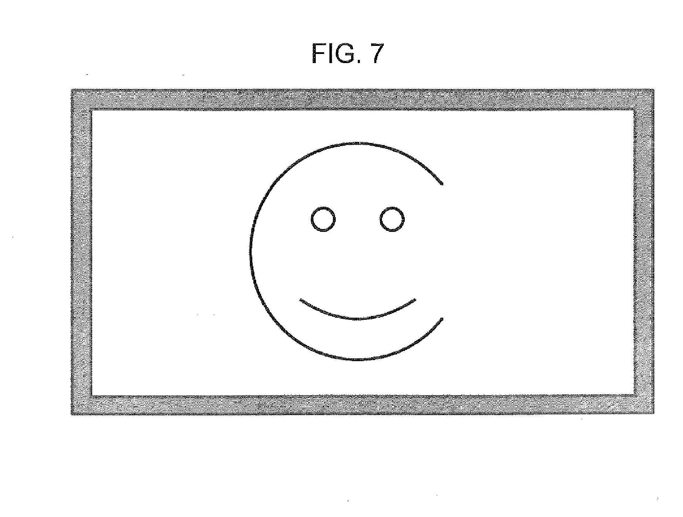

FIG. 7 illustrates the result of performing the function specified by the second gesture 160 with respect to the contents included in the area that is specified by the first gesture among the contents of the document, after the first gesture 150 and the second gesture 160 as illustrated in FIGS. 3 to 6 are inputted. FIG. 7 is a diagram of a terminal in which a part of a picture in the document is deleted according to an embodiment of the present invention.

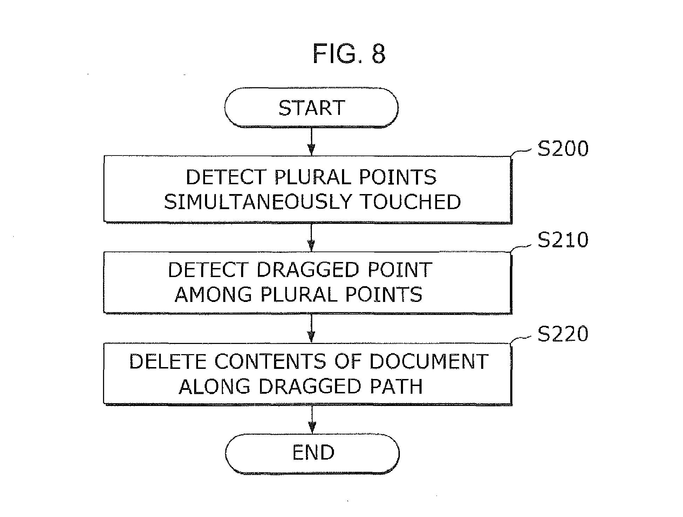

FIG. 8 is a flowchart illustrating a method for operating a terminal 100 according to another embodiment of the present invention. According to an embodiment, it is assumed that the input unit 110 of the terminal 100 is a touch screen.

Referring to FIG. 8, the method for operating the terminal 100 according to this embodiment of the present invention may first detect at least two points which are concurrently (e.g., simultaneously) touched (S200). For example, the method according to this embodiment may detect whether a multi-touch of the touch screen has been performed, and if so, the multi-touch points may be detected.

If only one point is touched, the mode (e.g., an editing mode) may be changed to an "insert" mode. In the "insert" mode, if the touched point is dragged, a line may be inserted in the document being edited along the dragged path.

If two or more points are concurrently (e.g., simultaneously) touched, the mode may be changed to a "delete" mode. The operation in the "delete" mode will be described hereinafter.

Referring again to FIG. 8, detecting at least one dragged point among the touched points (S21 0) may be performed. For example, through the multi-touch of the touch screen, whether the touched point is dragged may be detected, and the dragged path may be detected after the mode is changed to the "delete" mode.

Next, deleting a portion of the document that corresponds to a path in which the point is dragged among the contents of the displayed document (S220) may be performed. For example, if the displayed document is a document that includes a picture, a part of the picture may be deleted along the dragged path. For example, a white line may be inserted in the document being edited along the dragged path. According to one embodiment, if the displayed document is a document that includes a text, a part of the text may be deleted along the dragged path. For example, the text in the document being edited may be replaced by a space along the dragged path.

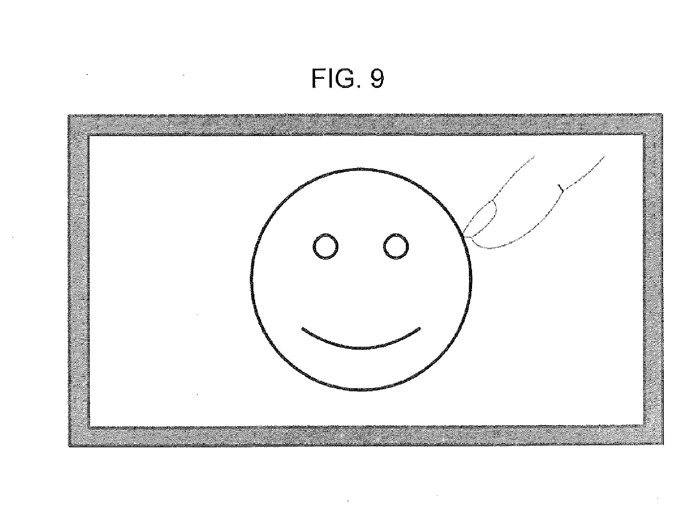

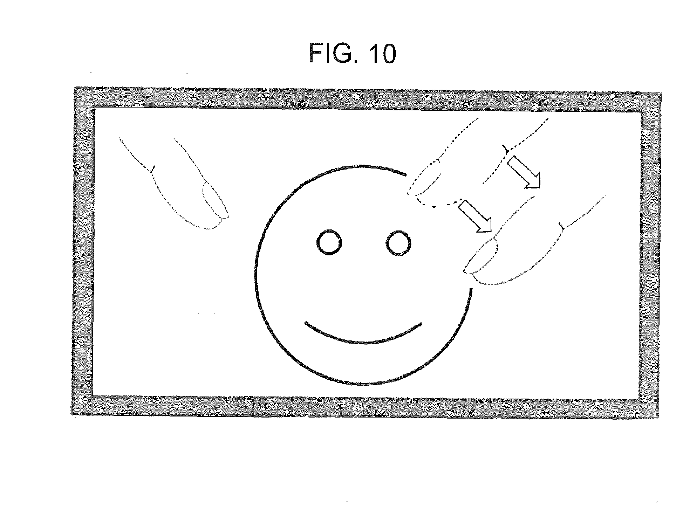

FIG. 9 is a conceptual diagram explaining a method for operating a terminal according to this embodiment of the present invention. FIG. 10 is a conceptual diagram explaining a method for operating a terminal according to an embodiment of the present invention.

FIG. 9 illustrates a screen of the terminal 100 in an "insert" mode according to this embodiment. For example, if only one point is touched and the touched point is dragged, a line may be inserted in the document being edited along the dragged path.

FIG. 10 illustrates the screen of the terminal 100 in a "delete" mode according to this embodiment. For example, if two points are concurrently (e.g., simultaneously) touched and one of the two points is dragged, a part of the picture is deleted along the dragged path as illustrated.

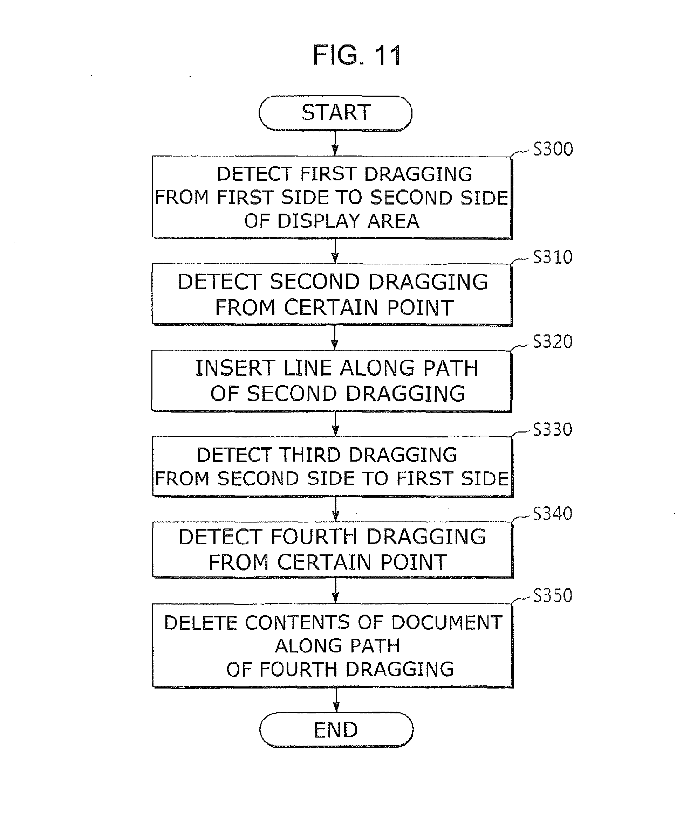

FIG. 11 is a flowchart illustrating a method for operating a terminal according to yet another embodiment of the present invention. According to this embodiment, it is assumed that the input unit 110 of the terminal 100 is a touch screen.

Referring to FIG. 11, a method for operating the terminal 100 according to this embodiment of the present invention may first detect first dragging from one point on a first side of a display area of the terminal 100 to one point on a second side that faces the first side (S300). If the dragging from one point on the first side of the display area of the terminal 100 to one point on the second side that faces the first side is detected, the mode may be changed to an "insert" mode.

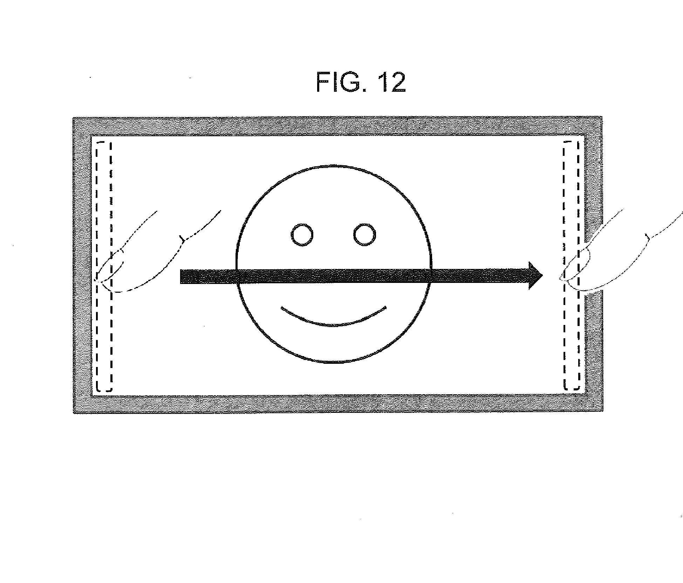

FIG. 12 is a conceptual diagram explaining a method for operating a terminal according to this embodiment of the present invention. Referring to FIG. 12, the dragging from one point on the left side of the display area to one point on the right side that faces the left side may be detected. Accordingly, if the dragging is detected as illustrated in FIG. 12, the mode may be changed to the "insert" mode.

Referring again to FIG. 11, detecting second dragging starting from a certain point other than (or except for) the first side and the second side of the display area (S31 0) may be performed. Next, inserting a line along a path in which the second dragging is performed (S320) may be performed. For example, in the "insert" mode, if the dragging starting from the certain point other than (or except for) the first side and the second side is detected, a line may be inserted in the document being edited along the dragged path.

Next, detecting third dragging from one point on the second side to one point on the first side (S330) may be performed. In contrast to the first dragging, if the dragging from one point on the second side to one point on the first side is detected, the mode may be changed to the "delete" mode.

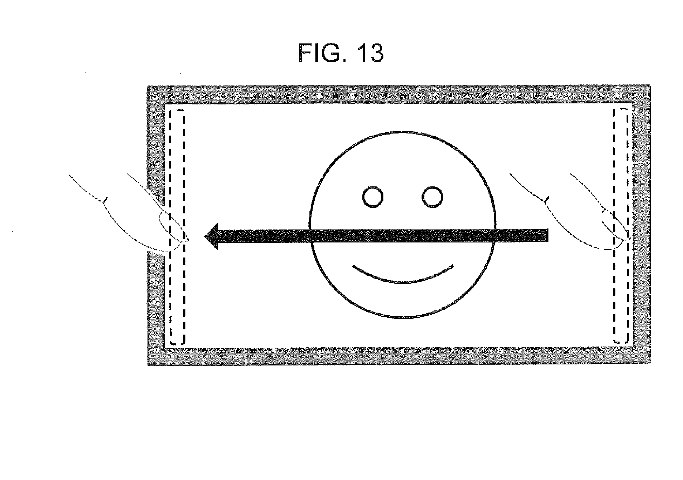

FIG. 13 is a conceptual diagram explaining a method for operating a terminal 100 according to this embodiment of the present invention. Referring to FIG. 13, the dragging from one point on the right side of the display area to one point on the left side that faces the right side may be detected. Accordingly, if the dragging is detected as illustrated in FIG. 13, the mode may be changed to the "delete" mode.

Referring again to FIG. 11, detecting fourth dragging starting from a certain point other than (or except for) the first side and the second side of the display area (S340) may be performed. Next, deleting a portion that corresponds to a path in which the fourth dragging is performed (S350) may be performed.

In the "delete" mode, for example, if the displayed document is a document including a picture, a part of the picture may be deleted along the path in which the fourth dragging is performed. For example, a white line may be inserted in the document being edited along the path in which the fourth dragging is performed. If the displayed document is a document that includes a text, a part of the text may be deleted along the path in which the fourth dragging is performed. For example, the text in the document being edited may be replaced by a space along the path in which the fourth dragging is performed.

As described above, according to embodiments of the present invention, the document including the picture or the text can be edited more easily. Further, the document can be edited without selecting an icon or a menu. Further, the document can be edited more rapidly.

While aspects of the present invention have been particularly shown and described with reference to embodiments thereof, it will be understood by those of ordinary skill in the art that various changes in form and details may be made therein without departing from the scope of the present invention as defined by the following claims.

## Claims

1. A method for operating a terminal, the method comprising:
receiving an input of a first gesture that indicates at least a partial area in a document displayed on the terminal;
receiving an input of a second gesture that corresponds to a specific function; and
performing the specific function with respect to contents of the document that are included in the at least the partial area in the document.

2. A method according to claim 1, wherein the receiving the input of the first gesture comprises receiving a closed path as the first gesture, and the first gesture indicates an area which is included in the input closed path in the document.

3. A method according to claim 2, wherein the closed path includes only curves.

4. A method according to claim 2, wherein the closed path is any one of a polygon, a rectangle, a triangle, a circle, or an ellipse.

5. A method according to claim 1, wherein the receiving the input of the first gesture comprises receiving a zigzag pattern as the first gesture, and the first gesture indicates an area which is included in a shape that is formed by connecting adjacent vertices of the input zigzag pattern to each other.

6. A method according to claim 1, wherein the receiving the input of the first gesture comprises receiving a swirl pattern as the first gesture, and the first gesture indicates an area which is included in a shape that is formed by an outline of the input swirl pattern in the document.

7. A method according to any preceding claim, wherein the receiving the input of the first gesture and the receiving the input of the second gesture comprise receiving the first gesture and the second gesture consecutively as one gesture.

8. A method according to any preceding claim, wherein the specific function is any one of "insert", "delete", "copy", "cut", or "paste," and the specific function is performed with respect to the contents included in the document.

9. A method according to claim 1, wherein the receiving the input of the second gesture comprises receiving a proof-correction mark that means "delete", and the specific function is a "delete" function.

10. A method according to claim 1, wherein the receiving the input of the second gesture comprises receiving an input of a straight line or a curve that crosses the at least the partial area, and the specific function is a "cut" function.

11. A method for operating a terminal, the method comprising:
detecting two or more first points, which are concurrently touched, from a touch screen;
detecting at least one dragged second point among the touched first points; and
deleting a portion of the contents of a document displayed on the touch screen, the portion corresponding to a path in which the second point is dragged.

12. A method according to claim 11, further comprising:
detecting a third point touched from the touch screen;
detecting dragging of the touched third point; and
inserting a line in the document along a path in which the third point is dragged.

13. A method according to claim 11 or 12, wherein the deleting comprises deleting at least a part of a picture included in the document along the path in which the second point is dragged, if the document includes the picture, and deleting at least a part of a text included in the document along the path in which the second point is dragged, if the document includes the text.

14. A method according to claim 13, wherein the deleting comprises inserting a white line in the document along the path in which the second point is dragged, if the document includes the picture, and replacing at least a part of the text by a space along the path in which the second point is dragged, if the document includes the text.

15. A method for operating a terminal, comprising:
detecting first dragging from one point on a first side region of a display area of the terminal to one point on a second side region;
detecting second dragging starting from a point other than on the first side and the second side of the display area; and
inserting a line in contents of a document that is displayed on the display area, along a path in which the second dragging is performed.

16. A method according to claim 15, further comprising:
detecting third dragging from one point on the second side to one point on the first side;
detecting fourth dragging starting from a point other than on the first side and the second side of the display area; and
deleting a portion of the contents of the document, the portion corresponding to a path in which the fourth dragging is performed.

17. A method according to claim 16, wherein the deleting comprises inserting a white line in the document along the path in which the fourth dragging is performed, if the document includes a picture, and replacing at least a part of a text by a space along the path in which the fourth dragging is performed, if the document includes the text.

18. A terminal comprising:
an input unit for receiving information;
a display unit for displaying contents included in a document; and
a control unit for changing the contents included in the document according to the information received through the input unit,
wherein the input unit is configured to receive an input of a first gesture that indicates at least a partial area in the document and a second gesture that corresponds to a specific function, and the control unit is configured to perform the specific function with respect to the contents included in the at least the partial area in the document.

19. A terminal comprising:
an input unit for receiving information;
a display unit for displaying contents included in a document; and
a control unit for changing the contents included in the document according to the information received through the input unit,
wherein the input unit is configured to detect two or more first points, which are concurrently touched, and detect at least one dragged second point among the touched first points, and the control unit is configured to delete a portion of the contents of the document, the portion corresponding to a path in which the second point is dragged.

20. A terminal comprising:
an input unit for receiving information;
a display unit for displaying contents included in a document; and
a control unit for changing the contents included in the document according to the information received through the input unit,
wherein the input unit is configured to detect first dragging from one point on a first side region of the display unit to one point on a second side region, and then detect second dragging starting from a point other than on the first side and the second side of the display unit, and the control unit is configured to delete a portion of the contents of the document, the portion corresponding to a path in which the second dragging is performed.
